# EUROPEAN PATENT SPECIFICATION

(11) **EP 3 485 255 B1**
(45) Date of publication and mention of the grant of the patent: **21.02.2024**
(21) Application number: 17748892.1
(22) Date of filing: 28.07.2017
(51) Int. Cl.: G01N 15/02, G01N 21/53, G01N 15/00, G01N 21/15

(54) **APPARATUS AND METHOD FOR MONITORING PARTICLE FLOW IN A STACK**
VORRICHTUNG UND VERFAHREN ZUR ÜBERWACHUNG DES PARTIKELFLUSSES IN EINEM KAMIN
APPAREIL ET PROCÉDÉ DE SURVEILLANCE DU FLUX DE PARTICULES DANS UNE CHEMINÉE

(30) Priority: 02.08.2016 GB 201613327
(43) Date of publication of application: 22.05.2019
(73) Proprietor: PCME Limited, St. Ives Cambridgeshire PE27 3GH (GB)
(72) Inventor: UNITT, David Christopher, St Ives, Cambridgeshire PE27 3GH (GB); LYE, Trevor Allan, St Ives, Cambridgeshire PE27 3GH (GB); GREETHAM, Bruce, Huntingdon, Cambridgeshire PE29 1LP (GB)
(74) Representative: Abel & Imray LLP
(86) International application number: PCT/GB2017/052206
(87) International publication number: WO 2018/025015

(56) References cited:
- EP-A1- 1 729 108
- WO-A2-2004/008117
- CH-A5- 567 721
- CN-U- 201 673 105
- GB-A- 1 173 937
- US-A- 4 640 621
- US-A- 5 028 790
- US-A- 5 561 290
- US-A1- 2005 068 527

## Description

### Field of the Invention

This invention relates to the field of measurement of particle flow in a stack. In particular, it relates to apparatus and a method for monitoring particle flow in a stack by measuring light scattered from the particles.

### Background of the Invention

Stacks, for example, industrial chimney stacks, are a potential source of pollution and consequently there are in many countries strict regulations regarding the control and measurement of pollutants emitted from the stacks. For example, there are restrictions on the rate at which particles, for example dust, are emitted from a stack. The present invention seeks to provide an improved or alternative apparatus and/or method for monitoring particles flowing in a stack.

CN201673105U relates to a calibration device of a backscattered light measurement instrument for the particle-phase concentration of a two-phase flow, which comprises a pressing protection cover, a reverse-thread gland, a calibration casing, a stainless-steel diffuse reflector, a coarse-adjustment screw and a fine-adjustment screw. The protection cover of the calibration device is connected with an air guide flange of a measurement instrument by screw threads. During span calibration and zero calibration, the reverse-thread gland is arranged between the calibration casing and the pressing protection cover, and when in a storage state, the calibration casing is reversely inserted into an inner cavity structure of the pressing protection cover, is pressed into the measurement instrument from the pressing protection cover and is fixed on the measurement instrument for storage in an integral type state, the measurement instrument works normally, and the aim of the design is achieved.

EP1729108A1 describes a device that has a transmitter inside a transmitting unit for emitting a transmission light-transmission beam, and a transmitter for emitting a stray light-transmission beam. The beams that run laterally to each other are out of phase within the transmitting unit. The beams are guided by a common light emitting window of the transmitting unit in the direction of a measured volume. Also described is a method of determining a particle concentration inside a measured volume according to the principle of transmission light measurement and stray light measurement.

CH 567721A5 describes a monitoring system having a fixed measuring arrangement employing a radiation beam. Variations in the optical system during working procedure are said to be avoided. The measuring beam is alternately transmitted through the medium flowing along the fluid path and a reference medium. Each time the amount of beam absorption is measured. The intensity of each reference is automatically switched to a stipulated constant value on the receiving side of the measuring arrangement. The beam source and the beam receiver are fixed close to each other. To provide the measuring path the beams are transmitted via a prism so that they are deflected through 180 deg. and returned to the receiver.

US2005/068527A1 describes a non-extractive optical particulate monitor for measuring particulate matter entrained in a flow within a smokestack. The monitor includes a light emission system which projects a beam of light into the smokestack, a light detection system positioned in a non co-linear relationship with the light emission system to receive and detect light scattered by the particulate matter in the smokestack, and a calibration system located between the light emission system and the light detection system to selectively enable light from the light emission system access to the light detection system without traveling through the flow structure for calibration of the monitor.

US5028790A describes apparatus which can be inserted between the stack and a transceiver of a transmissometer to provide zero and span measurements using the primary light source from the transceiver. The apparatus includes a calibration device mounted between the transceiver and one side of the stack and within the path of the light beam. A zero reflector is mounted within the calibration device for movement back and forth between an inactive position and an active position within the path of the light beam to reflect the same amount of light back into the transceiver as the retroreflector would across the stack when the stack is clear of smoke. In addition, a means is connected to the zero reflector for accomplishing this movement. A span filter is also provided within the calibration device which is movable between an active position in the light beam path to provide an upscale reference calibration check. The invention further contemplates a method of using the apparatus to establish zero and upscale references during initial set-up, followed by periodic establishment of new values indicative of soiling of the transceiver windows.

US4640621A describes a transmissometer including electronic shutters for interrupting the transmitted and reference light beams at selected locations and at selected time intervals for establishing the various modes of operation of the transmissometer. The electronic shutters take the form of liquid crystal displays that are selectively energizable to either a clear or an opaque condition. The transmissometer also includes an electronic stepwise light attenuator located in the path of the light beams. The attenuator includes a body and multiple liquid crystal display segments uniformly distributed throughout the body, with the segments being independently energizable to provide stepwise opacity.

GB1173937A describes a method wherein the concentration of a gaseous suspension is measured by comparing the intensity of light dispersed by the suspension with light transmitted through the suspension, a photo-electric detector being moveable from one position to another to receive the two kinds of light. Gaseous suspension may flow through a pipe having bores. A photo-electric device, mounted upon a rotatable sleeve containing apertures receives in the position shown dispersed light through bores. When rotated through degrees the photo-electric device receives the transmitted colluminated light beam through bores. The pointer of an indicator can be set to full deflection for the transmitted light and to zero when the photo-electric device receives no light as when the sleeve is turned so that the pipe closes the tube containing the device. A nozzle injects the suspension into the pipe and at the same time draws in fresh air to envelop the suspension to clean and cool the pipe.

US5561290A describes an optical detector calibrator system that simulates a source of optical radiation to which a detector to be calibrated is responsive. A light source selected to emit radiation in a range of wavelengths corresponding to the spectral signature of the source is disposed within a housing containing a microprocessor for controlling the light source and other system elements. An adjustable iris and a multiple aperture filter wheel are provided for controlling the intensity of radiation emitted from the housing by the light source to adjust the simulated distance between the light source and the detector to be calibrated. The geared iris has an aperture whose size is adjustable by means of a first stepper motor controlled by the microprocessor. The multiple aperture filter wheel contains neutral density filters of different attenuation levels which are selectively positioned in the path of the emitted radiation by a second stepper motor that is also controlled by the microprocessor. An operator can select a number of detector tests including range, maximum and minimum sensitivity, and basic functionality. During the range test, the geared iris and filter wheel are repeatedly adjusted by the microprocessor as necessary to simulate an incrementally increasing simulated source distance. A light source calibration subsystem is incorporated in the system which insures that the intensity of the light source is maintained at a constant level over time.

### Summary of the Invention

In a first aspect of the invention there is provided an apparatus for monitoring particles flowing in a stack having the features of independent claim 1. In a second aspect of the invention there is provided a method of monitoring particles flowing in a stack having the features of independent claim 13. Optional but preferred features are set out in the dependent claims. The present invention provides, according to independent claim 13, a method of monitoring particles flowing in a stack, the method comprising:
emitting light from a light source along an optical path for scattering from the particles;
rotating a rotatable monitoring assembly mounted in the optical path; and
detecting the scattered light using a detector; wherein the rotatable monitoring assembly contains at least two apertures and the method further comprises rotating the rotatable monitoring assembly into a plurality of different configurations, including:
a contamination-check configuration, wherein the light is reflected through the rotatable monitoring assembly onto the detector by reflectors, without entering the stack;
an operation configuration, wherein the light passes along the optical path through a first aperture in the rotatable monitoring assembly and into the stack unimpeded and light scattered from particles in the stack passes through a second aperture in the rotatable monitoring assembly to the detector;
a zero-check configuration, wherein the rotatable monitoring assembly blocks the light from reaching the stack and background light passes through the second aperture in the rotatable monitoring assembly and is detected by the detector;
a span-check configuration, wherein light of varying intensity from the light source passes along the optical path, through the first aperture in the rotatable monitoring assembly into the stack and light scattered from particles in the stack passes through the second aperture in the rotatable monitoring assembly and is detected at the detector; and
a safety-shutter configuration, wherein the rotatable monitoring assembly blocks particles from reaching optical components in the apparatus by forming a barrier.

According to independent claim 1, the invention provides an apparatus for monitoring particles flowing in a stack, the apparatus comprising:
a light source for emitting light along an optical path for scattering from the particles, wherein the intensity of the light from the light source can be varied;
a rotatable monitoring assembly mounted in the optical path;
a detector for detecting the scattered light;
wherein the rotatable monitoring assembly contains at least two apertures and is arranged to be rotated into a plurality of different configurations, including:
   a contamination-check configuration, wherein the light is reflected through the rotatable monitoring assembly onto the detector by reflectors, without entering the stack; and wherein the rotatable monitoring assembly is further rotatable into:
   an operation configuration, wherein the light passes along the optical path through a first aperture in the rotatable monitoring assembly and into the stack unimpeded and light scattered from particles in the stack passes through a second aperture in the rotatable monitoring assembly to the detector;
   a zero-check configuration, wherein the rotatable monitoring assembly blocks the light from reaching the stack and background light passes through the second aperture in the rotatable monitoring assembly and is detected by the detector;
   a span-check configuration, wherein light of varying intensity from the light source passes along the optical path, through the first aperture in the rotatable monitoring assembly, and into the stack and light scattered from particles in the stack passes through the second aperture in the rotatable monitoring assembly and is detected at the detector; and
   a safety-shutter configuration, wherein the rotatable monitoring assembly blocks particles from reaching optical components in the apparatus by forming a barrier.

When the rotatable monitoring assembly is rotated into the operation configuration, light from the light source passes along the optical path through a first aperture in the rotatable monitoring assembly and into the stack. The light is then scattered from particles in the stack, and the scattered light passes then through a second aperture in the rotatable monitoring assembly to the detector. The scattered light is then detected. The rotatable monitoring assembly is positioned along the optical axis of the light source and is rotatable about an axis parallel to the optical axis of the light source. The second aperture in the rotatable monitoring assembly may be larger than the first aperture. The second aperture may be formed from two superimposed circular apertures. This larger second aperture allows scattered light to pass from the stack to the detector when the rotatable monitoring assembly is in the zero-check position or the operating position.

When the rotatable monitoring assembly is rotated into the zero-check configuration, light from the light source is blocked by the rotatable monitoring assembly and does not enter the stack. Background light passes through the second aperture in the rotatable monitoring assembly and may be detected. This light detected when the rotatable monitoring assembly is in the zero-check configuration may be measured to provide a measurement of background light levels.

A stopper may be mounted on the rotatable monitoring assembly. When the rotatable monitoring assembly is in the zero-check configuration, the stopper may be positioned to block light from the light source from passing through the rotatable monitoring assembly.

When the rotatable monitoring assembly is rotated into the span-check configuration, light from the light source passes along the optical path, through the first aperture in the rotatable monitoring assembly and into the stack. The intensity of the light from the light source may be varied, for example, between 100% and 50 %. The variation may be periodic. This light is then scattered from particles in the stack. The scattered light passes through the second aperture in the rotatable monitoring assembly. Light of varying intensity may be detected at the detector. The light detected at the detector may vary periodically.

When the rotatable monitoring assembly is rotated into the contamination-check configuration, light from the light source is reflected through the rotatable monitoring assembly by reflectors, for example mirrors. The rotatable monitoring assembly may block all other light sources from the optical path to the detector. The reflected light from the light source may be attenuated by at least one attenuator before being detected by the detector. The light measured at the detector may then provide a measure of the throughput of the instrument. This measurement may be made during setup of the apparatus and may also be made periodically during operation. By comparing the initial measurement made during set-up to measurements made during operation a correction factor may be obtained which may be used to normalise signals measured at the detector.

At least one attenuator may be used to attenuate light when the rotatable monitoring assembly is in the contamination check position. The attenuators may be positioned in the path of the light, and may reduce the light intensity to prevent saturation of the detector. The attenuators may be diffusers such as opal diffusers, optic attenuators (lenses) or other attenuators. It may be possible to change the attenuators in order to measure different characteristics of the light source.

When the rotatable monitoring assembly is rotated into the safety-shutter configuration, the rotatable monitoring assembly blocks particles from reaching optical components in the apparatus by forming a barrier. The rotatable monitoring assembly may automatically rotate into the safety-shutter position in response to a signal.

An air purge may be positioned proximate to the rotatable monitoring assembly, for example on or near the rotatable monitoring assembly. It may be that the air purge is so arranged to cause an airflow (for example of clean air) to pass over the monitoring assembly that separates stack gas from the monitoring assembly. The air purge may be so positioned that it is spaced apart from the rotatable monitoring assembly. The air purge may be arranged to prevent gas and dust particles from the stack from reaching the rotatable monitoring assembly.

An air flow meter may also be positioned proximate to the rotatable monitoring assembly, for example on or near the rotatable monitoring assembly. The air flow meter may be arranged to monitor the flow rate of purge air. The air flow meter may be positioned proximate to the air purge. If the purge air flow rate drops below a specified level during operation, the rotatable monitoring assembly may be configured to automatically rotate into the safety-shutter position.

The apparatus may be installed in the wall of the stack. The particles in the stack may be, for example dust. The dust may be produced by an industrial process.

The light source may be a laser.

The detector may be an imager i.e. a device that provides an image of all light within its field of view. The imager may be a charge-coupled device (CCD). Alternatively, the detector may be a photodiode. Unlike an imager, a photodiode will not provide a spatially resolved image of items within its field of view, but will instead provide only an indication of the total amount of light in the field of view.

The rotatable monitoring assembly may include a third aperture for allowing light to pass from the light source to the stack.

The apparatus may include two light sources, for example two lasers. The light from the first light source may pass through a first aperture in the rotatable monitoring assembly in order to reach the stack, and the second light from the light source may pass through the third aperture in the rotatable monitoring assembly in order to reach the stack.

This may enable two different positions in the stack to be monitored at a given time.

The apparatus may include a beam splitter to split light from the light source along different optical paths. Light from the beam splitter may scatter from multiple different positions in the particle flow simultaneously. Again, this may enable multiple positions in the stack to be monitored at a given time.

The monitoring of the particles flowing in the stack may be, for example, of the density of the particles within the flow, the rate of flow of the particles, and/or the velocity of the particles.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Specific embodiments of the invention will now be described, by way of example only, with particular reference to the accompanying drawings, of which
- Figure 1: is a perspective view of the apparatus according to a first example embodiment of the invention;
- Figure 2: is a perspective view of the rotatable monitoring assembly;
- Figure 3: is a cross-sectional view of the rotatable monitoring assembly;
- Figure 4: is an alternative cross-sectional view of the rotatable monitoring assembly showing the stop for use in the zero-check configuration;
- Figure 5: is a front view of the rotatable monitoring assembly mounted in the casing in the operation configuration;
- Figure 6: is a front view of the rotatable monitoring assembly mounted in the casing in the zero-check configuration; and
- Figure 7: is a front view of the rotatable monitoring assembly mounted in the casing in the contamination-check, span-check and safety-shutter configurations.

### Detailed Description

Specific embodiments of the invention will now be described, by way of example only, with particular reference to the accompanying drawings.

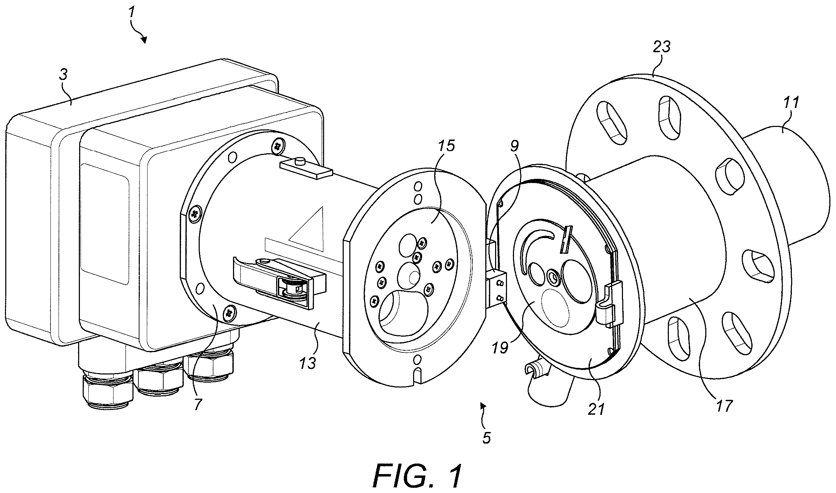

Figure 1 shows apparatus 1 for monitoring particles flowing in a stack according to an example embodiment of the invention. The apparatus includes a housing 3, positioned outside the wall of the stack, containing a light source (not shown) and a detector (not shown). The apparatus also includes a two-part tubular casing 5, attached at a first end 7 to the housing 3 and hinged at a mid-point 9 along its length. The casing has been divided into a first proximal part 13 and a second, distal part 17. The second, distal end 11 of the tubular casing 5 sits within the stack. An optical axis runs within the tubular casing 5 from the light source into the stack. The first, proximal part 13 of the casing 5, which is attached to the housing 3 contains a rotatable monitoring assembly 15. The second, distal part 17 of the casing 5 contains a circular cover plate 19 and a gasket 21. The apparatus 1 is mounted to the wall of the stack by a mounting 23 attached to the second part 17 of the casing 5. The mounting 23 can be affixed to the exterior wall of the stack.

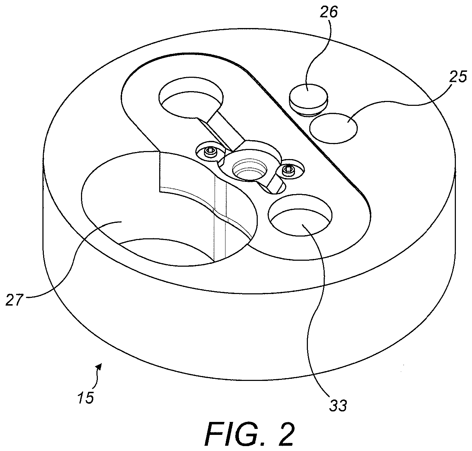

Figure 2 shows the rotatable monitoring assembly 15 which is housed within the first, proximal part 13 of the tubular casing 5. The rotatable monitoring assembly includes a first aperture 25 and a second larger aperture 27, the shape of which is formed from two overlapping circles. The rotatable monitoring assembly 15 is rotatable about the optical axis into a plurality of different configurations. In the operation configuration the rotatable monitoring assembly 15 is configured such that light from the light source passes along the optical axis within the housing 5 through the first aperture 25 and into the stack. The light is scattered from particles within the stack (not shown) and the scattered light passes through the second aperture 27 in the rotatable monitoring assembly 15. The scattered light is then detected by a detector (not shown), positioned within the housing 3.

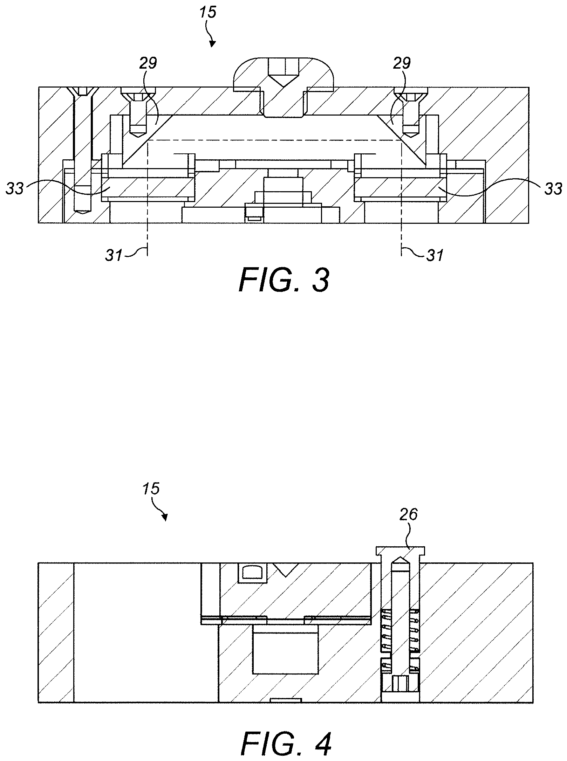

In the zero-check configuration, the rotatable monitoring assembly 15 is configured such that light from the light source passes along the optical axis within the housing, but is not incident on an aperture in the rotatable monitoring assembly 15. The light from the light source coincides with a stopper 26 on the rotatable monitoring assembly 15. Light from the light source is therefore blocked and does not enter the stack. Background light arising from the stack environment rather than scattered light from the light source passes through the second aperture 27 and is detected by the detector within the housing 3, providing a zero-check for the apparatus 1. Figure 4 shows a cross sectional view of the rotatable monitoring assembly 15 showing the stopper 26.

In the span-check configuration, the rotatable monitoring assembly 15 is configured such that light from the light source passes along the optical axis through the first aperture 25 in the rotatable monitoring assembly. As with the operation configuration, the light is scattered from particles in the stack and passes through the second aperture 27 in the rotatable monitoring assembly 15 before being detected by the detector in the housing 3. The intensity of the light from the light source is varied, in this example between 100% and 50%. In this example, the intensity variation is periodic. This leads to a periodically varying scattered intensity being measured at the detector.

Figure 3 shows a cross-sectional view of the rotatable monitoring assembly 15. In the contamination-check configuration, the rotatable monitoring assembly is configured such that light from the light source is reflected by two mirrors 29 along a path 31 through the rotatable monitoring assembly 15 and back to the detector within the housing 3, without entering the stack. The light that has been reflected by the mirrors 29 will be attenuated by attenuators 33 positioned within the rotatable monitoring assembly. In the example embodiment shown here, the attenuators 33 are opal diffusers, but they may be any other attenuators. The attenuators 33 reduce the intensity of the reflected light such that the detector is not saturated. A measurement of reflected light using the contamination check-configuration is made during set-up of the apparatus, and at regular intervals during operation. The measured signals recorded by the detector during operation are compared to the measured signal recorded during the apparatus set-up. The ratio between these signals is used to provide a correction factor, in order to normalise detected measurements made during operation.

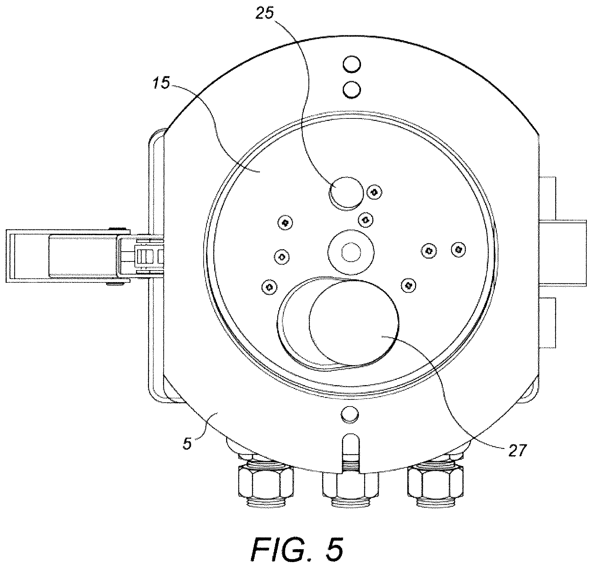

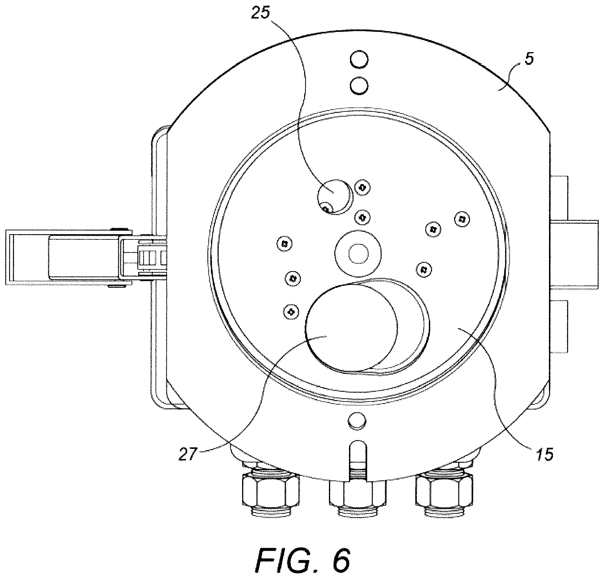

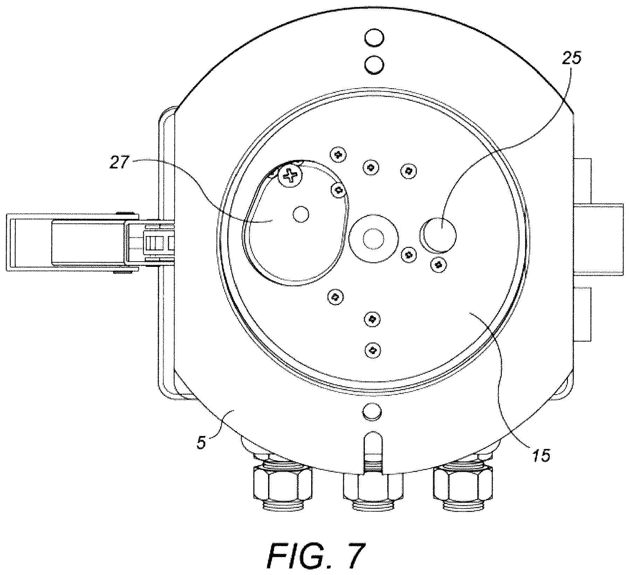

Figures 5, 6 and 7 show front views of the rotatable monitoring assembly 15 in the different configurations described above. Figure 5 shows the rotatable monitoring assembly in the operation configuration. Light from the light source passes along the optical axis through the first aperture 25 and scattered light from the stack passes through the second larger aperture 27 before reaching the detector. Figure 6 shows the rotatable monitoring assembly 15 in the zero-check position. The rotatable monitoring assembly has been rotated about the optical axis such that light from the light source is not incident on the first aperture 25. Background light may pass through the second, larger aperture 27 to the detector, but light from the light source is blocked from reaching the stack by the rotatable monitoring assembly 15. Figure 7 shows the rotatable monitoring assembly 15 in the contamination check configuration. In this configuration, the rotatable monitoring assembly 15 is rotated about the optical axis such that the light from the light source does not coincide with the first aperture 25, and second aperture 27 does not provide an unimpeded path to the detector. In the contamination-check configuration, the light from the light source is reflected from mirrors onto the detector. The rotatable monitoring assembly is rotated into this position when in the span-check configuration and the safety-shutter configuration.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In some embodiments of the invention, the rotatable monitoring assembly 15 includes a third aperture, a second light source and/or a beam splitter to partition light from the light source. In some such embodiments, light passes through the first 25 and third apertures and is scattered from different positions in the stack simultaneously.

## Claims

1. Apparatus (1) for monitoring particles flowing in a stack, the apparatus comprising:
a light source for emitting light along an optical path for scattering from the particles, wherein the intensity of the light from the light source can be varied;
a rotatable monitoring assembly (15) mounted in the optical path;
a detector for detecting the scattered light;
wherein the rotatable monitoring assembly (15) contains at least two apertures (25, 27) and is arranged to be rotated into a plurality of different configurations, including:
a contamination-check configuration, wherein the light is reflected through the rotatable monitoring assembly (15) onto the detector by reflectors (29), without entering the stack;
an operation configuration, wherein the light passes along the optical path through a first aperture (25) in the rotatable monitoring assembly (15) and into the stack unimpeded and light scattered from particles in the stack passes through a second aperture (27) in the rotatable monitoring assembly (15) to the detector;
a zero-check configuration, wherein the rotatable monitoring assembly (15) blocks the light from reaching the stack and background light passes through the second aperture (27) in the rotatable monitoring assembly (15) and is detected by the detector;
a span-check configuration, wherein light of varying intensity from the light source passes along the optical path, through the first aperture (25) in the rotatable monitoring assembly (15), and into the stack and light scattered from particles in the stack passes through the second aperture (27) in the rotatable monitoring assembly and is detected at the detector; and
a safety-shutter configuration, wherein the rotatable monitoring assembly (15) blocks particles from reaching optical components in the apparatus by forming a barrier.

2. The apparatus of claim 1, wherein the rotatable monitoring assembly (15) is positioned along the optical axis, and is rotatable about an axis parallel to the optical axis of the light source.

3. The apparatus of any of claims 1-2, wherein the second aperture (27) in the rotatable monitoring assembly (15) is larger than the first aperture (25), and wherein the second aperture (27) is formed from two superimposed circular apertures.

4. The apparatus of any of claims 1-3, wherein a stopper (26) is mounted on the rotatable monitoring assembly (15), such that when the rotatable monitoring assembly (15) is in the zero-check configuration, the stopper (26) is positioned to block light from the light source from passing through the rotatable monitoring assembly (15).

5. The apparatus of any of claims 1-4, wherein at least one attenuator (33) is used to attenuate light when the rotatable monitoring assembly (15) is in the contamination check position, and optionally wherein the at least one attenuator (33) is interchangeable in order to measure different characteristics of the light source.

6. The apparatus of any of claims 1-5, wherein an air purge is positioned proximate to the rotatable monitoring assembly (15) and is so arranged to cause an airflow, for example of clean air, to pass over the monitoring assembly (15) that separates stack gas from the monitoring assembly (15).

7. The apparatus of claim 6, wherein an air flow meter is positioned proximate to the rotatable monitoring assembly (15) and is arranged to monitor the flow rate of purge air.

8. The apparatus of any of claims 1-7, wherein the apparatus is configured to be installed in the wall of the stack.

9. The apparatus of any of claims 1-8, wherein the light source is a laser.

10. The apparatus of any of claims 1-9, wherein the detector is an imager.

11. The apparatus of any of claims 1-10, wherein the rotatable monitoring assembly (15) includes a third aperture for allowing light to pass from the light source to the stack.

12. The apparatus of any of claims 1-11, which includes two light sources.

13. A method of monitoring particles flowing in a stack, the method comprising:
emitting light from a light source along an optical path for scattering from the particles;
rotating a rotatable monitoring assembly (15) mounted in the optical path; and
detecting the scattered light using a detector;
wherein the rotatable monitoring assembly (15) contains at least two apertures (25, 27) and the method further comprises rotating the rotatable monitoring assembly (15) into a plurality of different configurations, including:
a contamination-check configuration, wherein the light is reflected through the rotatable monitoring assembly (15) onto the detector by reflectors (29), without entering the stack;
an operation configuration, wherein the light passes along the optical path through a first aperture (25) in the rotatable monitoring assembly (15) and into the stack unimpeded and light scattered from particles in the stack passes through a second aperture (27) in the rotatable monitoring assembly (15) to the detector;
a zero-check configuration, wherein the rotatable monitoring assembly (15) blocks the light from reaching the stack and background light passes through the second aperture (27) in the rotatable monitoring assembly (15) and is detected by the detector;
a span-check configuration, wherein light of varying intensity from the light source passes along the optical path, through the first aperture (25) in the rotatable monitoring assembly (15) into the stack and light scattered from particles in the stack passes through the second aperture (27) in the rotatable monitoring assembly (15) and is detected at the detector; and
a safety-shutter configuration, wherein the rotatable monitoring assembly (15) blocks particles from reaching optical components in the apparatus by forming a barrier.

14. The method of claim 13 wherein the monitoring of the particles flowing in the stack is of the density of the particles within the flow, the rate of flow of the particles, and/or the velocity of the particles.

15. The method of claim 13 or 14, wherein the method includes using the apparatus of any of claims 1 to 12.

## Patentansprüche

1. Vorrichtung (1) zum Überwachen von Partikeln, die in einen Kamin strömen, wobei die Vorrichtung umfasst:
eine Lichtquelle zum Emittieren von Licht entlang eines Strahlenganges zur Streuung an den Partikeln, wobei die Intensität des Lichts von der Lichtquelle variiert werden kann;
eine drehbare Überwachungseinheit (15), die in dem Strahlengang angebracht ist;
einen Detektor zum Erfassen des gestreuten Lichts;
wobei die drehbare Überwachungseinheit (15) mindestens zwei Öffnungen (25, 27) umfasst und so angeordnet ist, dass sie in eine Vielzahl von verschiedenen Konfigurationen gedreht werden kann, einschließlich:
eine Kontaminationskontroll-Konfiguration, in der das Licht durch die drehbare Überwachungseinheit (15) auf den Detektor durch Reflektoren (29) reflektiert wird, ohne in den Kamin einzutreten;
eine Betriebs-Konfiguration, bei der das Licht entlang des Strahlenganges durch eine erste Öffnung (25) in der drehbaren Überwachungseinheit (15) und ungehindert in den Kamin gelangt, und Licht, das von Partikeln im Kamin gestreut wird, durch eine zweite Öffnung (27) in der drehbaren Überwachungseinheit (15) zum Detektor gelangt;
eine Nullkontroll-Konfiguration, bei der die drehbare Überwachungseinheit (15) das Licht daran hindert, den Kamin zu erreichen, und Hintergrundlicht durch die zweite Öffnung (27) in der drehbaren Überwachungseinheit (15) hindurchgeht und von dem Detektor erfasst wird;
eine Messspanne-Kontroll-Konfiguration, bei der Licht unterschiedlicher Intensität von der Lichtquelle entlang des Strahlenganges durch die erste Öffnung (25) in der drehbaren Überwachungseinheit (15) und in den Kamin gelangt und Licht, das von Partikeln im Kamin gestreut wird, durch die zweite Öffnung (27) in der drehbaren Überwachungseinheit gelangt und an dem Detektor erfasst wird; und
eine Sicherheitsklappe-Konfiguration, bei der die drehbare Überwachungseinheit (15) Partikel daran hindert, optische Komponenten in der Vorrichtung zu erreichen, indem sie eine Barriere bildet.

2. Vorrichtung nach Anspruch 1, wobei die drehbare Überwachungseinheit (15) entlang der optischen Achse angeordnet und um eine Achse parallel zur optischen Achse der Lichtquelle drehbar ist.

3. Vorrichtung nach einem der Ansprüche 1-2, wobei die zweite Öffnung (27) in der drehbaren Überwachungseinheit (15) größer ist als die erste Öffnung (25), und wobei die zweite Öffnung (27) aus zwei übereinanderliegenden kreisförmigen Öffnungen gebildet ist.

4. Vorrichtung nach einem der Ansprüche 1-3, wobei ein Stopper (26) an der drehbaren Überwachungseinheit (15) angebracht ist, so dass, wenn sich die drehbare Überwachungseinheit (15) in der Nullkontroll-Konfiguration befindet, der Stopper (26) so positioniert ist, dass er Licht von der Lichtquelle daran hindert, durch die drehbare Überwachungseinheit (15) hindurchzutreten.

5. Vorrichtung nach einem der Ansprüche 1-4, wobei mindestens ein Dämpfer (33) verwendet wird, um Licht zu dämpfen, wenn sich die drehbare Überwachungseinheit (15) in der Kontaminationskontroll-Position befindet, und wobei optional der mindestens eine Dämpfer (33) austauschbar ist, um verschiedene Eigenschaften der Lichtquelle zu messen.

6. Vorrichtung nach einem der Ansprüche 1-5, wobei eine Spülluft in der Nähe der drehbaren Überwachungseinheit (15) positioniert und so angeordnet ist, dass ein Luftstrom, z.B. aus sauberer Luft, über die Überwachungseinheit (15) strömt, der das Rauchgas von der Überwachungseinheit (15) trennt.

7. Vorrichtung nach Anspruch 6, bei der ein Luftmengenmesser in der Nähe der drehbaren Überwachungseinheit (15) positioniert und so angeordnet ist, dass er die Durchflussrate der Spülluft überwacht.

8. Vorrichtung nach einem der Ansprüche 1-7, wobei die Vorrichtung so konfiguriert ist, dass sie in der Wand des Kamins installiert wird.

9. Vorrichtung nach einem der Ansprüche 1-8, wobei die Lichtquelle ein Laser ist.

10. Vorrichtung nach einem der Ansprüche 1-9, wobei der Detektor ein Bildwandler ist.

11. Vorrichtung nach einem der Ansprüche 1-10, wobei die drehbare Überwachungseinheit (15) eine dritte Öffnung aufweist, durch die Licht von der Lichtquelle zum Kamin gelangen kann.

12. Vorrichtung nach einem der Ansprüche 1-11, die zwei Lichtquellen enthält.

13. Verfahren zur Überwachung von Partikeln, die in einen Kamin strömen, wobei das Verfahren umfasst:
Emittieren von Licht von einer Lichtquelle entlang eines Strahlenganges zur Streuung an den Partikeln;
Drehen einer drehbaren Überwachungseinheit (15), die in dem Strahlengang angebracht ist; und
Erfassen des gestreuten Lichts unter Verwendung eines Detektors;
wobei die drehbare Überwachungseinheit (15) mindestens zwei Öffnungen (25, 27) umfasst und das Verfahren ferner das Drehen der drehbaren Überwachungseinheit (15) in eine Vielzahl von verschiedenen Konfigurationen umfasst, einschließlich:
eine Kontaminationskontroll-Konfiguration, in der das Licht durch die drehbare Überwachungseinheit (15) auf den Detektor durch Reflektoren (29) reflektiert wird, ohne in den Kamin einzutreten;
eine Betriebs-Konfiguration, bei der das Licht entlang des Strahlenganges durch eine erste Öffnung (25) in der drehbaren Überwachungseinheit (15) und ungehindert in den Kamin gelangt und Licht, das von Partikeln im Kamin gestreut wird, durch eine zweite Öffnung (27) in der drehbaren Überwachungseinheit (15) zum Detektor gelangt;
eine Nullkontroll-Konfiguration, bei der die drehbare Überwachungseinheit (15) das Licht daran hindert, den Kamin zu erreichen, und Hintergrundlicht durch die zweite Öffnung (27) in der drehbaren Überwachungseinheit (15) hindurchgeht und von dem Detektor erfasst wird;
eine Messspanne-Kontroll-Konfiguration, bei der Licht unterschiedlicher Intensität von der Lichtquelle entlang des Strahlenganges durch die erste Öffnung (25) in der drehbaren Überwachungseinheit (15) in den Kamin gelangt und Licht, das von Partikeln im Kamin gestreut wird, durch die zweite Öffnung (27) in die drehbaren Überwachungseinheit (15) gelangt und am Detektor erfasst wird; und
eine Sicherheitsklappe-Konfiguration, bei der die drehbare Überwachungseinheit (15) Partikel daran hindert, optische Komponenten in der Vorrichtung zu erreichen, indem sie eine Barriere bildet.

14. Verfahren nach Anspruch 13, wobei die Überwachung der im Kamin fließenden Partikel die Dichte der Partikel in der Strömung, die Strömungsrate der Partikel und/oder die Geschwindigkeit der Partikel ist.

15. Verfahren nach Anspruch 13 oder 14, wobei das Verfahren die Verwendung der Vorrichtung nach einem der Ansprüche 1 bis 12 umfasst.

## Revendications

1. Appareil (1) de surveillance de particules circulant dans une cheminée, l'appareil comprenant :
une source de lumière pour émettre de la lumière le long d'un trajet optique pour une diffusion depuis les particules, dans lequel l'intensité de la lumière provenant de la source de lumière peut être modifiée ;
un ensemble de surveillance rotatif (15) monté dans le trajet optique ;
un détecteur pour une détection de la lumière diffusée ;
dans lequel l'ensemble de surveillance rotatif (15) contient au moins deux ouvertures (25, 27) et est agencé pour être tourné dans une pluralité de configurations différentes, y compris :
une configuration de contrôle de contamination, dans laquelle la lumière est réfléchie à travers l'ensemble de surveillance rotatif (15) jusque sur le détecteur par des réflecteurs (29), sans pénétrer dans la cheminée ;
une configuration de fonctionnement, dans laquelle la lumière passe le long du trajet optique à travers une première ouverture (25) dans l'ensemble de surveillance rotatif (15) et dans la cheminée sans entrave, et de la lumière diffusée depuis les particules dans la cheminée passe à travers une deuxième ouverture (27) dans l'ensemble de surveillance rotatif (15) vers le détecteur ;
une configuration de contrôle de zéro, dans laquelle l'ensemble de surveillance rotatif (15) empêche la lumière d'atteindre la cheminée et de la lumière de fond passe à travers la deuxième ouverture (27) dans l'ensemble de surveillance rotatif (15) et est détectée par le détecteur ;
une configuration de contrôle d'intervalle, dans laquelle de la lumière d'intensité variable provenant de la source de lumière passe le long du trajet optique, à travers la première ouverture (25) dans l'ensemble de surveillance rotatif (15), et jusque dans la cheminée et de la lumière diffusée depuis les particules dans la cheminée passe à travers la deuxième ouverture (27) dans l'ensemble de surveillance rotatif et est détectée au niveau du détecteur ; et
une configuration d'obturateur de sécurité, dans laquelle l'ensemble de surveillance rotatif (15) empêche les particules d'atteindre des composants optiques dans l'appareil en formant une barrière.

2. Appareil selon la revendication 1, dans lequel l'ensemble de surveillance rotatif (15) est positionné le long de l'axe optique, et est rotatif autour d'un axe parallèle à l'axe optique de la source de lumière.

3. Appareil selon l'une quelconque des revendications 1 à 2, dans lequel la deuxième ouverture (27) dans l'ensemble de surveillance rotatif (15) est plus grande que la première ouverture (25), et dans lequel la deuxième ouverture (27) est formée à partir de deux ouvertures circulaires superposées.

4. Appareil selon l'une quelconque des revendications 1 à 3, dans lequel un obturateur (26) est monté sur l'ensemble de surveillance rotatif (15), de telle sorte que lorsque l'ensemble de surveillance rotatif (15) est dans la configuration de contrôle de zéro, l'obturateur (26) est positionné pour empêcher de la lumière provenant de la source de lumière de passer à travers l'ensemble de surveillance rotatif (15).

5. Appareil selon l'une quelconque des revendications 1 à 4, dans lequel au moins un atténuateur (33) est utilisé pour atténuer de la lumière lorsque l'ensemble de surveillance rotatif (15) est dans la position de contrôle de contamination, et facultativement dans lequel le au moins un atténuateur (33) est interchangeable afin de mesurer différentes caractéristiques de la source de lumière.

6. Appareil selon l'une quelconque des revendications 1 à 5, dans lequel une purge d'air est positionnée à proximité de l'ensemble de surveillance rotatif (15) et est agencée de manière à provoquer le passage d'un flux d'air, par exemple d'air propre, au-dessus de l'ensemble de surveillance (15) qui sépare le gaz de cheminée de l'ensemble de surveillance (15).

7. Appareil selon la revendication 6, dans lequel un débitmètre d'air est positionné à proximité de l'ensemble de surveillance rotatif (15) et est agencé pour surveiller le débit d'air de purge.

8. Appareil selon l'une quelconque des revendications 1 à 7, dans lequel l'appareil est configuré pour être installé dans la paroi de la cheminée.

9. Appareil selon l'une quelconque des revendications 1 à 8, dans lequel la source de lumière est un laser.

10. Appareil selon l'une quelconque des revendications 1 à 9, dans lequel le détecteur est un dispositif d'imagerie.

11. Appareil selon l'une quelconque des revendications 1 à 10, dans lequel l'ensemble de surveillance rotatif (15) inclut une troisième ouverture pour permettre à de la lumière de passer de la source de lumière vers la cheminée.

12. Appareil selon l'une quelconque des revendications 1 à 11, qui inclut deux sources de lumière.

13. Procédé de surveillance de particules circulant dans une cheminée, le procédé comprenant les étapes consistant à :
émettre de la lumière depuis une source de lumière le long d'un trajet optique pour une diffusion depuis les particules ;
mettre en rotation un ensemble de surveillance rotatif (15) monté dans le trajet optique ; et
détecter la lumière diffusée en utilisant un détecteur ;
dans lequel l'ensemble de surveillance rotatif (15) contient au moins deux ouvertures (25, 27) et le procédé comprend en outre une mise en rotation de l'ensemble de surveillance rotatif (15) dans une pluralité de configurations différentes, y compris :
une configuration de contrôle de contamination, dans laquelle la lumière est réfléchie à travers l'ensemble de surveillance rotatif (15) jusque sur le détecteur par des réflecteurs (29), sans pénétrer dans la cheminée ;
une configuration de fonctionnement, dans laquelle la lumière passe le long du trajet optique à travers une première ouverture (25) dans l'ensemble de surveillance rotatif (15) et dans la cheminée sans entrave, et de la lumière diffusée depuis les particules dans la cheminée passe à travers une deuxième ouverture (27) dans l'ensemble de surveillance rotatif (15) vers le détecteur ;
une configuration de contrôle de zéro, dans laquelle l'ensemble de surveillance rotatif (15) empêche la lumière d'atteindre la cheminée et de la lumière de fond passe à travers la deuxième ouverture (27) dans l'ensemble de surveillance rotatif (15) et est détectée par le détecteur ;
une configuration de contrôle d'intervalle, dans laquelle de la lumière d'intensité variable provenant de la source de lumière passe le long du trajet optique, à travers la première ouverture (25) dans l'ensemble de surveillance rotatif (15) jusque dans la cheminée, et de la lumière diffusée depuis les particules dans la cheminée passe à travers la seconde ouverture (27) dans l'ensemble de surveillance rotatif (15) et est détectée au niveau du détecteur ; et
une configuration d'obturateur de sécurité, dans laquelle l'ensemble de surveillance rotatif (15) empêche les particules d'atteindre des composants optiques dans l'appareil en formant une barrière.

14. Procédé selon la revendication 13, dans lequel la surveillance des particules circulant dans la cheminée concerne la densité des particules dans le flux, le débit de flux des particules et/ou la vitesse des particules.

15. Procédé selon la revendication 13 ou 14, dans lequel le procédé inclut l'utilisation de l'appareil selon l'une quelconque des revendications 1 à 12.
